# FASCICULE DE BREVET EUROPEEN

(11) **EP 3 030 797 B1**
(45) Date de publication et mention de la délivrance du brevet: **26.12.2018**
(21) Numéro de dépôt: 14747357.3
(22) Date de dépôt: 31.07.2014
(51) Int. Cl.: F16B 5/02, F16B 39/34

(54) **DISPOSITIF DE FIXATION DE STRUCTURE**
STRUKTURBEFESTIGUNGSVORRICHTUNG
STRUCTURE SECURING DEVICE

(30) Priorité: 05.08.2013 FR 1357791
(43) Date de publication de la demande: 15.06.2016
(73) Titulaire: Lisi Aerospace, 75583 Paris Cedex 12 (FR)
(72) Inventeur: PAILHORIES, Guy, F-12200 Villefranche de Rouergue (FR); DOUARD, Yoann, F-12200 Saint Rémy (FR)
(74) Mandataire: Ipside
(86) Numéro de dépôt international: PCT/EP2014/066471
(87) Numéro de publication internationale: WO 2015/018731

(56) Documents cités:
- EP-A1- 0 063 181
- FR-A1- 2 367 941
- US-A- 5 244 326
- US-A- 5 904 461

## Description

La présente invention se rapporte à un dispositif de fixation d'éléments de structure, de type vis/insert, faisant intervenir un insert taraudé fixé dans une structure.

L'invention s'applique notamment au domaine aéronautique, en particulier pour la fixation d'équipements sur des carters moteur ou des panneaux de structure d'avion en matériau composite.

Des dispositifs de fixation d'équipements sur des carters ou des panneaux en aluminium sont déjà connus. On peut notamment citer les inserts à rivets pour les tôles fines, les douilles à clavettes pour les pièces massives, ou encore les inserts flottants tels que décrits par exemple dans le document EP0643231.

Il est également connu d'autre formes de dispositifs de fixations adaptées pour des situations particulières, par exemple l'insert et la vis du document US 5244326, mais qui en absence de frein entre les deux éléments ne sont pas adaptés dans les conditions d'utilisation pouvant conduire à un desserrage de la fixation, ou encore la fixation aveugle du document EP 063181.

Il est aussi connu d'utiliser des éléments élastiques tel que dans le document FR2367941 pour maintenir un arbre lisse dans un alésage lisse également.

Dans le document US5904461, le fût taraudé de l'écrou d'une fixation à vis-écrou comporte un anneau en plastique placé dans une gorge réalisée dans la partie taraudée du fût. Dans la configuration proposée la mise en place de l'anneau apparaît délicate et le comportement du dit anneau en plastique lorsque la vis est mise en place difficilement maîtrisable. »

Le matériau composite amène de nouvelles contraintes de résistance et de montage, qui nécessitent une évolution technique du dispositif de fixation. Par ailleurs, en raison de la destination du dispositif, il n'est autorisé qu'un faible dépassement des éléments de part et d'autre de la structure.

De plus, il est souhaitable de pouvoir visser ou dévisser plusieurs fois les vis, par exemple pour la pose/dépose des équipements en maintenance sans avoir à charger les inserts implantés dans la structure. L'utilisation de vis en alliage de titane permet de diminuer le poids de la fixation, mais génère un plus grand risque de grippage et d'endommagement des dispositifs de freinage couramment réalisés par la déformation du matériau de l'insert, compromettant le nombre de cycles de vissage / dévissage possibles. La présente invention permet de résoudre ces problèmes. Plus précisément, l'invention se rapporte à un dispositif de fixation pour une structure munie d'un alésage cylindrique débouchant selon la revendication 1.

La bague en matériau plastique, de préférence du polyimide, assure une fonction de freinage afin d'éviter le desserrage intempestif de la vis sous l'effet de vibrations par exemple. Par ailleurs, cette bague plastique réduit considérablement les risques de grippage, notamment avec des vis en alliage de titane et permet d'augmenter considérablement le nombre de cycles de vissage / dévissage possibles.

De manière préférentielle, une surface externe du corps tubulaire de l'insert comprend des cannelures longitudinales, en contact avec le matériau adhésif. Les cannelures longitudinales permettent une meilleure répartition de l'adhésif, et donc une plus grande solidité de l'ensemble structure / insert une fois la polymérisation réalisée.

De manière préférentielle, la portion filetée tronconique de la vis est contenue dans le corps de l'insert. Ainsi, il n'y a pas de dépassement de la vis au niveau d'au moins une des surfaces de la structure.

De manière préférentielle, la bague, à l'état neuf, a un diamètre interne inférieur à un diamètre maximal de la tige filetée de la vis. Par « diamètre maximal de la tige filetée », on entend un diamètre tangent aux crêtes des filets.

L'invention se rapporte également à une structure munie d'un alésage cylindrique débouchant, ladite structure comprenant un dispositif de fixation tel que décrit ci-dessus, la structure étant telle que le corps de l'insert est inséré dans l'alésage, la surface externe du corps tubulaire étant relié à une surface intérieure de l'alésage au moyen d'un adhésif.

Préférentiellement, la tête de l'insert est au contact d'une surface de la structure.

L'invention se rapporte également à un ensemble pour installation d'un dispositif de fixation tel que décrit ci-dessus, ledit ensemble comprenant un insert tel que décrit ci-dessus, ainsi qu'un dispositif de maintien de l'insert. Le dispositif de maintien est formé d'un matériau déformable par compression et comprend : une tige d'introduction, ayant un diamètre inférieur à un diamètre interne de l'insert ; une portion de maintien adjacente à la tige d'introduction, ayant un diamètre supérieur au diamètre interne de l'insert et apte à être introduite dans l'insert par compression ; une jupe flexible, adjacente à la portion de maintien, un évasement de la jupe étant orienté vers ladite portion de maintien ; une extrémité de préhension, adjacente à la jupe flexible.

Le dispositif de maintien sert à insérer et à maintenir l'insert dans l'alésage avant la prise de l'adhésif.

L'invention se rapporte également à un procédé d'installation d'un dispositif de fixation tel que décrit ci-dessus, ledit procédé mettant en oeuvre un ensemble tel que décrit ci-dessus et comprenant les étapes suivantes :
- insertion de la tige d'introduction dans l'insert, du côté opposé à la tête ;
- immobilisation de l'insert autour de la portion de maintien, par compression de ladite portion ;
- répartition d'un fluide adhésif polymérisable sur la surface externe du corps de l'insert ;
- insertion du dispositif de maintien dans l'alésage de la structure du côté de la première surface, par l'extrémité de préhension, jusqu'à émergence de la jupe flexible d'un côté opposé et mise en contact de la tête de l'insert avec la première surface ;
- traction sur la tige d'introduction de sorte à plaquer la jupe contre la structure ;
- polymérisation de l'adhésif ;
- extraction du dispositif de maintien par traction sur l'extrémité de préhension.

De manière préférentielle, la bague en matériau plastique est taraudée par vissage d'une tige filetée dans l'insert, ladite tige filetée étant alors introduite du côté de la tête de l'insert, avant ou après installation de l'insert dans la structure. Le taraudage est ainsi pré-formé sur la bague, dans la continuité du taraudage de l'insert.

L'invention sera mieux comprise à la lecture de la description qui suit et à l'examen des figures qui l'accompagnent. Celles-ci sont données à titre indicatif et nullement limitatif de l'invention. Les figures montrent :
- Figure 1 : une vue en coupe d'un dispositif selon un mode de réalisation de l'invention ;
- Figure 2 : une vue en perspective d'éléments représentés à la figure 1, à l'état dissocié ;
- Figure 3 : une vue en coupe d'un ensemble pour installation du dispositif de la figure 1.

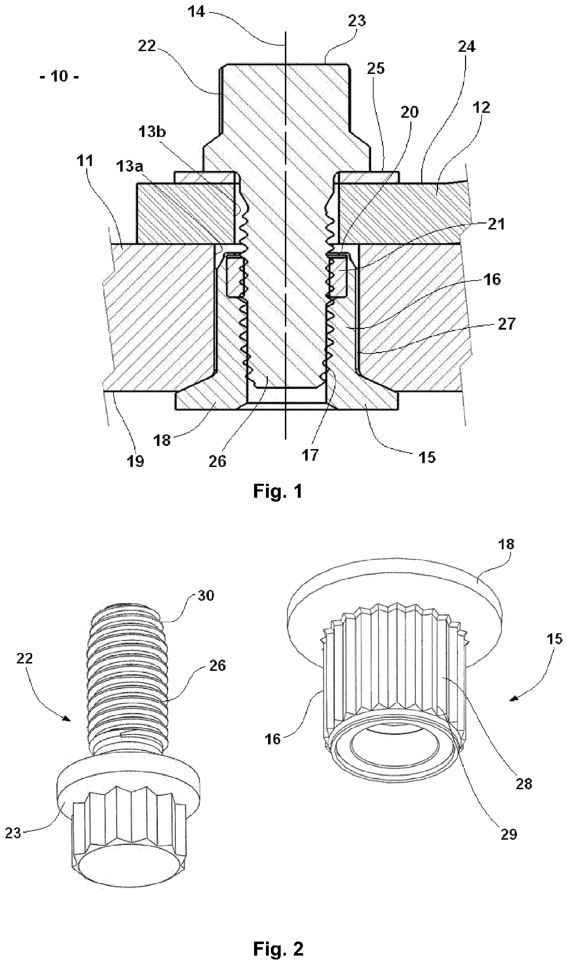

La figure 1 représente une vue en coupe d'un dispositif 10 de fixation selon un mode de réalisation de l'invention.

Le dispositif 10 a pour fonction d'assembler un équipement ou une ferrure 12 sur un panneau 11. Ledit panneau 11 est pourvu d'un alésage 13a traversant, disposé selon un axe 14. L'équipement 12 est par exemple pourvu d'une platine de fixation portant un perçage 13b.

Le panneau 11 et l'équipement 12 sont au contact l'un de l'autre, l'alésage 13a et le perçage 13b étant disposés coaxialement. L'alésage 13a et le perçage 13b n'ont pas le même diamètre dans cet exemple.

Le dispositif 10 comporte un insert 15 métallique, ledit insert comprenant un corps 16 tubulaire muni d'un taraudage 17 interne. Le corps 16 tubulaire se développe selon l'axe 14. Les dimensions de l'alésage 13a du panneau 11 sont adaptées à un montage du corps 16 tubulaire dans ledit alésage.

Par ailleurs, l'insert 15 est solidarisé à l'alésage 13a du panneau 11 par un matériau adhésif 27. L'insert est ainsi bloqué en rotation à l'intérieur de l'alésage.

Le corps 16 est relié à une tête 18 de diamètre supérieur au diamètre du corps 16, en contact avec une première surface 19 du panneau 11. Dans l'exemple de la figure 1, la tête 18 est fraisée et l'alésage 13a comporte lui-même un fraisage dans lequel prend place la tête 18, ladite tête se situant sensiblement dans un plan de la surface 19. Selon un autre mode de réalisation de l'invention, la tête 18 est protubérante par rapport à la surface 19.

Une extrémité axiale 20 du corps 16, opposée à la tête 18, comporte une cavité interne annulaire non taraudée dans laquelle est insérée une bague 21 en matériau plastique. La bague 21 est solidarisée au corps 16, par exemple par sertissage de l'extrémité axiale 20, de manière à être bloquée en rotation selon l'axe 14. Le matériau de la bague 21 est par exemple du polyimide ou du polyamide. Le matériau VESPEL® fourni par la société DuPont est adapté pour réaliser la bague 21.

Le dispositif 10 comporte en outre une vis 22 disposée selon l'axe 14. Ladite vis comporte une tête 23 protubérante, en contact avec une rondelle 25, elle-même en contact avec une deuxième surface 24 de l'équipement 12. Selon une variante, la rondelle n'est pas utilisée et la tête 23 est directement en contact avec la surface 24.

La tête 23 est reliée à une tige filetée cylindrique 26. La tige filetée 26 est assemblée au taraudage 17 de l'insert. En variante, la vis peut comprendre un fût cylindrique lisse pour s'adapter à l'épaisseur de l'élément 12.

Un diamètre interne de la bague 21 est inférieur à un diamètre maximal de la tige 26 filetée cylindrique. Par « diamètre maximal », on entend un diamètre tangent aux crêtes des filets. Ainsi, lesdits filets sont aptes à creuser le matériau de la bague 21 lors du premier vissage de la vis dans l'insert.

Lors de l'insertion d'une vis 22 dans un insert 15 neuf, la bague 21 est donc taraudée par l'action du filetage de la tige 26.

Cette étape peut alternativement être réalisée avant l'installation de l'insert 15 dans le panneau 11, lors de sa fabrication en usine, au moyen d'une tige filetée présentant le même filetage que celui de la vis 22.

De préférence, pour cette étape de taraudage, une tige filetée est introduite du côté de la tête 18 de l'insert, c'est-à-dire du côté opposé à celui par lequel la vis 22 est introduite dans l'insert tel que représenté à la figure 1. Ainsi, lorsque la tige filetée 26 atteint la bague 21 neuve, elle est déjà en coopération avec le taraudage 17 de l'insert. Le taraudage formé sur le matériau de la bague 21 se trouve donc en continuité avec le taraudage 17 de l'insert 15.

La figure 2 montre une vue en perspective de l'insert 15 et de la vis 22 à l'état non assemblé.

Une surface externe 28 du corps 16 de l'insert comporte des cannelures 29 longitudinales. Ces cannelures permettent une meilleure répartition du matériau adhésif 27 et un meilleur positionnement de l'insert 15 dans l'alésage 13.

Une extrémité de la vis 22, opposée à la tête 23, est formée par une portion filetée 30 tronconique, adjacente à la tige 26 filetée cylindrique. Le diamètre de la portion 30 diminue à mesure que l'on s'éloigne de la tête 23.

Cette portion 30 tronconique sert de guidage à la vis 22 lors de son introduction dans l'insert 15. Si la bague 21 a préalablement été taraudée, l'augmentation progressive du diamètre du filetage facilite l'engagement dudit filetage avec le taraudage de la bague 21. Si la bague 21 est neuve, l'augmentation progressive du diamètre du filetage facilite le taraudage de la bague, et augmente de façon progressive le couple au vissage de la vis 22 dans l'insert 15.

Lorsque la vis 22 est installée dans l'insert 15, comme sur la figure 1, la présence de la bague 21 plastique assure un freinage de la vis et limite ainsi les risques de desserrage de la vis 22.

La tête 23 de la vis et la tête 18 de l'insert sont disposées à l'opposé l'une de l'autre afin de constituer les extrémités terminales du dispositif de fixation 10 en appui sur deux surfaces opposées de la structure. Ainsi, l'encombrement du dispositif de fixation à l'extérieur du panneau 11 est minimal. De plus, la tête 18 de l'insert s'oppose aux forces de traction exercées par la vis 22, engendrées par le poids et les vibrations de l'équipement 12. La bague 21 de freinage disposée à l'extrémité axiale 20 de l'insert bloque les premiers filets de la vis 22 situés au plus près de la tête 23, ce qui limite au maximum tout mouvement de la vis après assemblage.

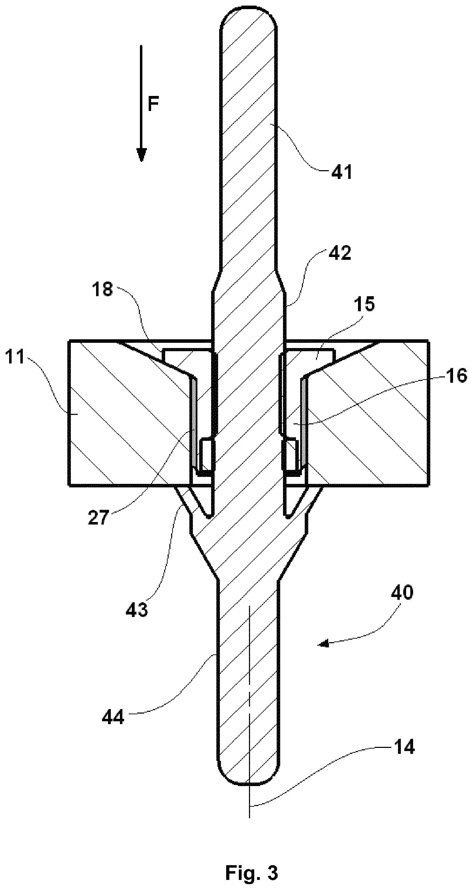

La figure 3 montre une vue en coupe de l'insert 15 et du panneau 11 au cours d'un procédé d'installation du dispositif 10.

Avant d'assembler la vis 22 à l'insert 15, il convient de monter ledit insert 15 dans l'alésage 13a du panneau 11, et de solidariser ledit insert 15 au panneau 11 au moyen du matériau 27 adhésif.

A cet effet est utilisé un dispositif 40 de maintien. Le dispositif 40 est formé d'un matériau déformable, tel que du silicone.

Le dispositif 40 de maintien se développe selon l'axe 14 et comprend une tige 41 d'introduction, ayant un diamètre inférieur à un diamètre interne de l'insert. Cette tige 41 est adjacente à une portion 42 de maintien, ayant un diamètre supérieur au diamètre interne de l'insert. Sur la figure 3, la portion 42 est introduite dans l'insert et déformée par compression.

Le dispositif 40 comprend en outre une jupe 43 flexible, adjacente à la portion de maintien. Un évasement de la jupe est orienté vers ladite portion de maintien. Enfin, le dispositif 40 comprend une extrémité 44 de préhension, adjacente à la jupe flexible. Un diamètre de l'extrémité 44 est inférieur au diamètre de l'alésage 13a.

Un procédé d'installation du dispositif 10 peut se dérouler de la manière suivante : tout d'abord, le dispositif 40 de maintien est assemblé à l'insert 15, par insertion de la tige 41 d'introduction dans ledit insert, du côté opposé à la tête 18. Par traction sur la tige 41, l'insert 15 est ensuite coincé sur la portion 42 de maintien, dont le matériau déformable est comprimé par le corps 16 de l'insert.

Un adhésif 27 est alors réparti sur la surface 28 externe du corps de l'insert, en particulier sur les cannelures 29 longitudinales. L'adhésif est préférentiellement un fluide visqueux polymérisable, notamment formé de deux composants qui sont mélangés juste avant application. Il est également possible de répartir l'adhésif dans l'alésage 13a de la structure, ou de répartir l'adhésif à la fois sur la surface 28 de l'insert, et sur la surface de l'alésage 13a.

Le dispositif 40 est ensuite inséré dans l'alésage 13 du panneau 11, du côté de la première surface 19 dans le sens de la flèche F. Plus précisément, l'extrémité 44 de préhension est insérée dans l'alésage 13a, jusqu'à émergence de la jupe 43 flexible du côté opposé. Le corps 16 de l'insert est également inséré dans l'alésage 13a, jusqu'à mise en contact de la tête 18 avec la première surface 19 ou, comme sur la figure 3, avec le fraisage de l'alésage 13a réalisé au niveau de ladite surface 19.

Une traction est ensuite appliquée sur la tige 41 d'introduction, de sorte à plaquer la jupe flexible 43 contre le panneau 11. Le dispositif 40, au moyen de ladite jupe 43, exerce alors un effort de traction sur l'insert 15 selon l'axe 14, la tête 18 de l'insert et la portion 42 de maintien résistant ensemble à cet effort. Une fois le dispositif 40 de maintien relâché, la portion 42 se dilate à l'intérieur du taraudage de l'insert. Du fait de son élasticité, il pince l'insert 15 dans le panneau 11, l'empêchant de s'extraire de l'alésage 13a.

L'insert étant maintenu dans le panneau 11, l'adhésif 27 est ensuite solidifié par polymérisation à l'air libre ou par cuisson selon la nature du matériau du dispositif de maintien 40. L'insert 15 se retrouve solidarisé au panneau 11.

Le dispositif 40 de maintien est ensuite extrait de l'insert 15 par traction sur l'extrémité 44 de préhension. Le panneau 11 muni d'un insert 15 peut ensuite être assemblé à un panneau 12 au moyen d'une vis 22, pour former le dispositif 10 de la figure 1.

## Revendications

1. Dispositif (10) de fixation pour une structure (11) munie d'un alésage (13a) cylindrique débouchant, le dispositif de fixation comprenant :
- un insert (15) comprenant un corps (16) tubulaire cylindrique muni d'un taraudage (17) interne, une tête (18) de dimensions radiales supérieures aux dimensions du corps, le corps comportant une bague (21) en matériau plastique;
- une vis (22) comprenant une tige (16) filetée cylindrique assemblée au taraudage de l'insert, une tête (23) de dimensions radiales supérieures aux dimensions de ladite tige ;
le dispositif étant **caractérisé en ce que** :
- une extrémité (20) du corps opposée à la tête (18) comporte une cavité annulaire retenant la bague (21) en matériau plastique, et ;
- une extrémité (30) de la tige filetée cylindrique est tronconique ;
la tige filetée est introduite dans l'insert du côté de la bague de sorte que, à l'état assemblé, la tête de l'insert et la tête de la vis forment les extrémités terminales du dispositif de fixation (10).

2. Dispositif selon la revendication 1, tel que la surface externe (28) du corps tubulaire de l'insert comprend des cannelures (29) longitudinales.

3. Dispositif selon la revendication 1 ou la revendication 2, tel que la portion (30) filetée tronconique de la vis est contenue dans le corps de l'insert dans l'état assemblé.

4. Dispositif selon la revendication 1 tel que la tête (18) de l'insert est fraisée et la tête (23) de la vis est protubérante.

5. Dispositif selon la revendication 1 tel que la bague (21), à l'état neuf, a un diamètre interne inférieur à un diamètre maximal de la tige filetée de la vis.

6. Structure (11) munie d'un alésage (13a) cylindrique débouchant, ladite structure comprenant un dispositif de fixation (10) selon l'une des revendications 1 à 5, telle que le corps (16) de l'insert (15) est inséré dans l'alésage (13a), la surface externe (28) du corps tubulaire étant relié à une surface intérieure de l'alésage au moyen d'un adhésif (27).

7. Structure (11) selon la revendication 6 telle que la tête (18) de l'insert (15) est au contact d'une surface (19) de la structure.

8. Ensemble pour installation d'un dispositif de fixation dans une structure munie d'un alésage (13) cylindrique débouchant, ledit ensemble comprenant :
- un dispositif de fixation (10) selon l'une des revendications 1 à 5,
- un dispositif (40) de maintien de l'insert, formé d'un matériau déformable, ledit dispositif de maintien comprenant :
- une tige (41) d'introduction, ayant un diamètre inférieur à un diamètre interne de l'insert ;
- une portion (42) de maintien adjacente à la tige d'introduction, ayant un diamètre supérieur au diamètre interne de l'insert et apte à être introduite dans l'insert par compression ;
- une jupe (43) flexible, adjacente à la portion de maintien, un évasement de la jupe étant orienté vers ladite portion de maintien ;
- une extrémité (44) de préhension, adjacente à la jupe flexible.

9. Procédé d'installation d'un dispositif de fixation dans une structure (11) munie d'un alésage (13) cylindrique débouchant mettant en oeuvre un ensemble (10, 40) selon la revendication 8 et comprenant les étapes suivantes :
- insertion de la tige (41) d'introduction du dispositif (40) de maintien dans l'insert (15), du côté opposé à la tête ;
- immobilisation de l'insert (15) autour de la portion de maintien, par compression de ladite portion ;
- répartition d'un fluide visqueux adhésif (27) polymérisable sur la surface externe du corps de l'insert ou dans l'alésage (13);
- insertion du dispositif (40) de maintien dans l'alésage (13) de la structure du côté d'une première surface, par l'extrémité de préhension, jusqu'à émergence de la jupe flexible d'un côté opposé et mise en contact de la tête de l'insert avec la première surface ;
- traction sur la tige (41) d'introduction de sorte à plaquer la jupe (43) flexible contre la structure ;
- polymérisation de l'adhésif (27) ;
- extraction du dispositif de maintien par traction sur l'extrémité (44) de préhension ;

10. Procédé selon la revendication 9, tel que la bague (21) en matériau plastique à l'état neuf est taraudée par vissage d'une tige (26) filetée dans l'insert, ladite tige filetée étant alors introduite du côté de la tête (18) de l'insert, avant ou après installation de l'insert dans la structure (11).

## Patentansprüche

1. Befestigungsvorrichtung (10) für eine Struktur (11), die mit einer ausmündenden zylindrischen Bohrung (13a) ausgestattet ist, wobei die Befestigungsvorrichtung umfasst:
- einen Einsatz (15), umfassend einen rohrförmigen zylindrischen Körper (16), der mit einem Innengewinde (17) ausgestattet ist, einen Kopf (18) mit radialen Abmessungen, die größer sind als die Abmessungen des Körpers, wobei der Körper einen Ring (21) aus Kunststoffmaterial umfasst;
- eine Schraube (22), umfassend einen zylindrischen Gewindeschaft (16), der mit dem Innengewinde des Einsatzes zusammengefügt wird, einen Kopf (23) mit radialen Abmessungen, die größer sind als die Abmessungen des Schafts;
wobei die Vorrichtung **dadurch gekennzeichnet ist, dass**:
- ein Ende (20) des Körpers, das dem Kopf (18) gegenüberliegt, einen ringförmigen Hohlraum umfasst, der den Ring (21) aus Kunststoffmaterial zurückhält, und;
- ein Ende (30) des zylindrischen Gewindeschafts kegelstumpfförmig ist;
der Gewindeschaft von der Seite des Rings her so in den Einsatz eingeführt wird, dass im zusammengefügten Zustand der Kopf des Einsatzes und der Kopf der Schraube die Abschlussenden der Befestigungsvorrichtung (10) bilden.

2. Vorrichtung nach Anspruch 1, derart, dass die Außenfläche (28) des rohrförmigen Körpers des Einsatzes Längsrillen (29) umfasst.

3. Vorrichtung nach Anspruch 1 oder Anspruch 2, derart, dass der kegelstumpfförmige Gewindeabschnitt (30) der Schraube im zusammengefügten Zustand im Körper des Einsatzes enthalten ist.

4. Vorrichtung nach Anspruch 1, derart, dass der Kopf (18) des Einsatzes gefräst ist, und der Kopf (23) der Schraube übersteht.

5. Vorrichtung nach Anspruch 1, derart, dass der Ring (21) im Neuzustand einen Innendurchmesser aufweist, der kleiner ist als ein maximaler Durchmesser des Gewindeschafts der Schraube.

6. Struktur (11), die mit einer ausmündenden zylindrischen Bohrung (13a) ausgestattet ist, wobei die Struktur eine Befestigungsvorrichtung (10) nach einem der Ansprüche 1 bis 5 umfasst, derart, dass der Körper (16) des Einsatzes (15) in die Bohrung (13a) eingesetzt wird, wobei die Außenfläche (28) des rohrförmigen Körpers mittels eines Klebstoffs (27) mit einer Innenfläche der Bohrung verbunden wird.

7. Struktur (11) nach Anspruch 6, derart, dass der Kopf (18) des Einsatzes (15) mit einer Fläche (19) der Struktur in Berührung steht.

8. Satz zum Einbauen einer Befestigungsvorrichtung in eine Struktur, die mit einer ausmündenden zylindrischen Bohrung (13) versehen ist, wobei der Satz umfasst:
- eine Befestigungsvorrichtung (10) nach einem der Ansprüche 1 bis 5,
- eine Vorrichtung (40) zum Halten des Einsatzes, die aus einem verformbaren Material gebildet ist, wobei die Haltevorrichtung umfasst:
- einen Einführschaft (41), der einen Durchmesser aufweist, der kleiner ist als ein Innendurchmesser des Einsatzes;
- einen an den Einführschaft angrenzenden Halteabschnitt (42), der einen Durchmesser aufweist, der größer ist als der Innendurchmesser des Einsatzes, und der dazu in der Lage ist, durch Kompression in den Einsatz eingeführt zu werden;
- einen flexiblen Kragen (43), der an den Halteabschnitt angrenzt, wobei eine Aufweitung des Kragens zum Halteabschnitt hin ausgerichtet ist;
- ein Griffende (44), das an den flexiblen Kragen angrenzt.

9. Verfahren zum Einbauen einer Befestigungsvorrichtung in eine Struktur (11), die mit einer ausmündenden zylindrischen Bohrung (13) ausgestattet ist, welches einen Satz (10, 40) nach Anspruch 8 zum Einsatz bringt und die folgenden Schritte umfasst:
- Einsetzen des Einführschafts (41) der Haltevorrichtung (40) in den Einsatz (15) von der Seite her, die dem Kopf gegenüberliegt;
- Immobilisieren des Einsatzes (15) um den Halteabschnitt herum durch Komprimieren des Abschnitts;
- Verteilen eines polymerisierbaren viskosen Klebstofffluids (27) an der Außenfläche des Körpers des Einsatzes oder in der Bohrung (13);
- Einsetzen der Haltevorrichtung (40) in die Bohrung (13) der Struktur über das Griffende von der Seite einer ersten Fläche her bis zum Austreten des flexiblen Kragens auf einer gegenüberliegenden Seite, und Berühren der ersten Fläche mit dem Kopf des Einsatzes;
- Ziehen am Einführschaft (41), um den flexiblen Kragen (43) gegen die Struktur zu pressen;
- Polymerisieren des Klebstoffs (27);
- Herausziehen der Haltevorrichtung durch Ziehen am Griffende (44).

10. Verfahren nach Anspruch 9, derart, dass der Ring (21) aus Kunststoffmaterial im Neuzustand durch Einschrauben eines Gewindeschafts (26) in den Einsatz mit einem Innengewinde versehen wird, wobei der Gewindeschaft anschließend vor oder nach Einbau des Einsatzes in der Struktur (11) von der Seite des Kopfes (18) des Einsatzes her eingeführt wird.

## Claims

1. Securing device (10) for a structure (11) provided with an open-ended cylindrical bore (13a), the securing device comprising:
- an insert (15) comprising a cylindrical tubular body (16) provided with an internal tapping (17), a head (18) with radial dimensions greater than the dimensions of the body, the body comprising a ring (21) made of plastic material;
- a screw (22) comprising a cylindrical threaded shank (16) assembled with the tapping of the insert, a head (23) with radial dimensions greater than the dimensions of said shank; the device being **characterised in that**:
- an end (20) of the body opposite the head (18) comprises an annular cavity retaining the ring (21) made of plastic material, and;
- an end (30) of the cylindrical threaded shank is frustoconical;
the threaded shank is inserted into the insert on the ring side in such a way that, in the assembled state, the head of the insert and the head of the screw form the terminal ends of the securing device (10).

2. Device according to claim 1, such that the outer surface (28) of the tubular body of the insert comprises longitudinal flutes (29).

3. Device according to claim 1 or claim 2, such that the threaded frustoconical portion (30) of the screw is contained in the body of the insert in the assembled state.

4. Device according to claim 1 such that the head (18) of the insert is milled and the head (23) of the screw is protruding.

5. Device according to claim 1 such that the ring (21), when brand new, has an inner diameter less than a maximum diameter of the threaded shank of the screw.

6. Structure (11) provided with an open-ended cylindrical bore (13a), said structure comprising a securing device (10) according to one of claims 1 to 5, such that the body (16) of the insert (15) is inserted into the bore (13a), the outer surface (28) of the tubular body being connected to an inner surface of the bore by means of an adhesive (27).

7. Structure (11) according to claim 6 such that the head (18) of the insert (15) is in contact with a surface (19) of the structure.

8. Assembly for installation of a securing device in a structure provided with an open-ended cylindrical bore (13), said assembly comprising:
- a securing device (10) according to one of claims 1 to 5,
- a device (40) for maintaining the insert, formed from a deformable material, said device for maintaining comprising:
- an insertion shank (41), having a diameter less than an inner diameter of the insert;
- a portion (42) for maintaining adjacent to the insertion shank, having a diameter greater than the inner diameter of the insert and able to be inserted into the insert by compression;
- a flexible skirt (43), adjacent to the portion for maintaining, a flaring of the skirt being oriented towards said portion for maintaining;
- a grasping end (44), adjacent to the flexible skirt.

9. Method for installing a securing device in a structure (11) provided with an open-ended cylindrical bore (13) implementing an assembly (10, 40) according to claim 8 and comprising the following steps:
- insertion of the insertion shank (41) of the device (40) for maintaining into the insert (15), on the side opposite the head;
- immobilisation of the insert (15) around the portion for maintaining, by compression of said portion;
- distribution of an adhesive viscous fluid (27) that can be polymerised on the outer surface of the body of the insert or in the bore (13);
- insertion of the device (40) for maintaining into the bore (13) of the structure on the side of a first surface, by the grasping end, until emergence of the flexible skirt on an opposite side and putting into contact of the head of the insert with the first surface;
- traction on the insertion shank (41) in such a way as to thrust the flexible skirt (43) against the structure;
- polymerisation of the adhesive (27);
- extraction of the device for maintaining by traction on the grasping end (44).

10. Method according to claim 9, such that the ring (21) made of plastic material when brand new is tapped by screwing a threaded screw (26) into the insert, said threaded shank then being inserted on the side of the head (18) of the insert, before or after installation of the insert into the structure (11).
